# EUROPEAN PATENT SPECIFICATION

(11) **EP 3 219 560 B1**
(45) Date of publication and mention of the grant of the patent: **17.10.2018**
(21) Application number: 16160394.9
(22) Date of filing: 15.03.2016
(51) Int. Cl.: B60T 1/10, B60T 13/66, B60L 7/26, B60T 17/22, B60T 8/17

(54) **METHOD OF PROVIDING BRAKE SELECTION RECOMMENDATIONS TO A DRIVER OF A TRAIN AND TRAIN DRIVER ADVISORY SYSTEM**
VERFAHREN ZUR BEREITSTELLUNG VON BREMSENAUSWAHLEMPFEHLUNGEN FÜR EINEN FAHRER EINES ZUGES UND ZUGFÜHRERBERATUNGSSYSTEM
PROCÉDÉ DE FOURNITURE DE RECOMMANDATIONS DE SÉLECTION DE FREIN AU CONDUCTEUR D'UN TRAIN ET SYSTÈME DE CONSEIL POUR CONDUCTEUR DE TRAIN

(43) Date of publication of application: 20.09.2017
(73) Proprietor: KNORR-BREMSE Systeme für Schienenfahrzeuge GmbH, 80809 München (DE)
(72) Inventor: Komlosi, Istvan, 4225 Debrecen (HU); Csuros, Csaba, 1091 Budapest (HU); Moro, Milan Janos, 2422 Mezofalva (HU)

(56) References cited:
- EP-A2- 2 532 563
- WO-A2-2014/177552
- US-B1- 6 219 595

## Description

The present invention relates to the control of trains. In particular, it relates to train driver advisory systems that provide driving recommendations to the driver, and to methods of generating such driving recommendations and providing the same to the driver.

Modern trains are very complex technical systems. In particular, modern trains have a wide variety of different sub-systems that all work together for a safe, reliable and efficient operation of the train. In order to ensure such operation, the various sub-systems have to be periodically checked, and individual components have to be replaced, either in routine intervals or upon occurrences of failures or potential failure alerts. Overall, extensive maintenance measures are necessary for ensuring safe, reliable and efficient train operation. Not all components of a train have the same or similar maintenance intervals. To the contrary, the maintenance intervals of different components/sub-systems can differ over a wide range. Also, the nature and frequency of particular trips taken by the train may have an impact on the different service intervals of the different components. Accordingly, many components are subject to inherently different maintenance intervals and are subject to maintenance being required earlier or later than anticipated due to particular stresses in particular operating situations. These effects tend to cause frequent maintenance operations on the train, leading to the train being out of service frequently, and/or to components being replaced before the replacement being required or after the replacement being required, in order to reduce the number of services, leading to inefficient maintenance on the one hand and potentially unsafe or unreliable operating conditions on the other hand.

US 6 219 595 B1 discloses a method of and a system for minimizing undesirable brake release in the brake system of a train having a pneumatic brake on each car connected to a brake pipe which is controlled by a brake pipe controller. The method includes determining the status of the brake system throughout the train and determining a minimal brake pipe reduction for the brake pipe controller, using the status of the brake system. The determined minimal brake pipe reduction is displayed by itself or in combination with the brake pipe reduction produced by the brake pipe controller.

EP 2 532 563 A2 discloses a method that involves loading physical properties of a rail vehicle in a control unit, where the rail vehicle forms a train unit. A costing model is selected for calculating a desired speed profile based on traction of the rail vehicle. A target speed profile is calculated for a route to be traveled, and a travel instruction is updated while driving with respect to current position and speed of the rail vehicle and data that is stored in data memory. The cost of amount of energy required for the route to be traveled is optimized by the calculation of the travel instruction.

Accordingly, it would be beneficial to enable an improved operation of the train, reducing the maintenance efforts and/or improving the maintenance efficiency.

Exemplary embodiments of the invention include a method of providing brake selection recommendations to a driver of a train in accordance with claim 1 and a train driver advisory system in accordance with claim 14. Further embodiments are given in the dependent claims.

Exemplary embodiment of the invention include a method of providing brake selection recommendations to a driver of a train during operation of the train, with the train having at least one electrodynamic brake and at least one friction brake. The method comprises the steps of defining a brake preference rate between the at least one electrodynamic brake and the at least one friction brake; determining an energy-optimized velocity profile for a trip segment of the train, with the energy-optimized velocity profile having a plurality of braking sections, and associating each of the plurality of braking sections with a respective brake selection recommendation, wherein the determining of the energy-optimized velocity profile and the associating of each of the plurality of braking sections with a respective brake selection recommendation are constrained by a maximum travel time for the trip segment and the brake preference rate between the at least one electrodynamic brake and the at least one friction brake; and providing the respective brake selection recommendations for the plurality of braking sections to the driver of the train.

Exemplary embodiments of the invention allow for controlling the relative usage of electrodynamic brakes on the one hand and friction brakes on the other hand. In this way, the relative wear of the electrodynamic brakes and the friction brakes can be adjusted and the requirements for maintenance can be aligned in time. In other words, for given maintenance intervals in terms of usage of the electrodynamic brakes and the friction brakes, their extent of usage can be adapted via the method of providing brake selection recommendations to the driver of the train, such that the maintenance intervals of the electrodynamic brakes and the friction brakes end at the same or a similar point in time. In this way, the maintenance of the electrodynamic brakes and the friction brakes may be performed during the same maintenance service, i.e. during the same down time of the train. This is beneficial for a number of reasons. The number of maintenance services may be reduced. The maintenance may be performed in a more efficient manner, because the disassembly for reaching the brake systems can be coordinated for both the electrodynamic brakes and the friction brakes. The aligning of the maintenance intervals may reduce the tendency of prematurely or belatedly maintaining / replacing certain components, as is often done according to prior art approaches due to the combined maintaining of components at the same time, despite different maintenance intervals. Also, having the electrodynamic brakes and the friction brakes at similar points of their life cycle may lead to a more predictable relative behavior of the two kinds of brakes, thus contributing to a safe and reliable operation of the train.

It is pointed out that, while being a beneficial effect, the aligning of maintenance intervals of the electrodynamic brakes and the friction brakes is not a necessary feature of the method of providing brake selection recommendations in accordance with exemplary embodiments of the invention. The defining of a brake preference rate and the provision of brake selection recommendations in accordance with that brake preference rate may also have other beneficial effects. For example, the brake preference rate may ensure that the time spans between uses of the friction brakes are not too long, thus ensuring a quick and reliable application of the friction brakes when selected by the driver. In this way, the described method may overcome the tendency in the prior art to use the electrodynamic brakes, which are able to regenerate energy and which produce less noise, whenever possible, causing long phases of non-use of the friction brakes.

Embedding the generation of the brake selection recommendations into the determination of an energy-optimized velocity profile for a trip segment of the train is an efficient way of implementing the generation of the brake selection recommendations in an existing frame work, as many modern trains have so-called driver advisory systems that calculate energy-optimized velocity profiles and provide speed recommendations and/or accelerating/braking recommendations to the driver of the train. In addition to being efficiently implementable, this approach may also allow for taking into account interdependencies between energy-optimization and brake selection.

The determining of the energy-optimized velocity profile for a trip segment and the associating of each of the plurality of braking sections with a respective brake selection recommendation can be carried out in an integrated manner or can be carried out as subsequent steps. With an integrated approach, the recommendation to use the electrodynamic brakes may be made, while taking into account the potential of re-feeding energy into the electricity grid and/or generating energy for being temporarily stored in an on-train battery for later use, thus helping in minimizing energy consumption. For example, the electrodynamic brakes may be recommended for such braking sections where the energy regeneration can be carried out with a particularly high efficiency. However, it is also possible that the energy-optimized velocity profile is determined in a first step, without taking into account which brakes are used for which braking section, and that the brake selection recommendations are assigned to each of the plurality of braking sections without taking into account the effect on the minimization of energy consumption. Such an approach with two sub-steps leads to a less complex optimization of the velocity profile.

The term energy-optimized velocity profile refers to the velocity profile for the trip segment in question that minimizes the energy consumption, while satisfying one or more additional conditions. The one or more additional conditions may be arbitrarily set conditions, such as the maximum travel time for the trip segment, as well as conditions arising from the dynamic behavior of the train, such as the accelerating capabilities and braking capabilities of the train. For performing the energy-optimization, the energy-consumption and, potentially, energy recuperation for accelerating the train, braking the train, and driving the train at a constant speed, depending on the speed, are used. The determining of the energy-optimized velocity profile may also take the distance / length of the trip segment and the altitude profile of the trip segment into account. It may also take into account the maximum speed of the train and the speed limits along the trip segment. Depending on the particular application, the determining of the energy-optimized velocity profile may take one or more of or all of these factors into account. The determining of the energy-optimization velocity profile may be carried out both for fuel-powered trains as well as for electrically-powered trains. It may further take into account or disregard energy recuperation.

By associating each of the plurality of braking sections of the energy-optimized velocity profile with a respective brake selections recommendation and by constraining these associations by the brake preference rate, the generation of the brake selection recommendations can be conveniently implemented in the framework of the determining of the energy-optimized velocity profile. As indicated above, the constraint of the brake preference rate may be applied to the determining of the energy-optimized velocity profile as well as to the associating of each of the plurality of braking sections with the respective brake selection recommendation. However, it is also possible that the constraint of the brake preference rate is only applied to the associating of each of the plurality of braking sections with a respective brake selection recommendation, while being disregarded in the step of determining the energy-optimized velocity profile.

The defining of the brake preference brake rate between the at least one electro-dynamic brake and the at least one friction brake may be a straightforward fetching of a pre-defined brake preference rate, such as from a suitable memory. However, it is also possible that the brake preference rate is defined in accordance with more elaborate procedures, as will be discussed below.

The brake selection recommendations may be provided to the driver of the train in any suitable manner. For example, a visual indication of the respective brake selection recommendation may be provided to the driver of the train. It is also possible that the driver of the train is provided with an according audio signal or with any other suitable means of notification.

The method in accordance with exemplary embodiments of the invention generates recommendations to the driver of the train. The driver may chose to follow these recommendations or disregard these recommendations, in case other considerations, such as safety-relevant considerations, call for a different kind of brake being applied in a given situation. In this way, the final control stays with the driver of the train, while the beneficial effects of using the different brakes according to the brake preference brake rate can be achieved by the driver via following the recommendations. It is pointed out that is also possible that the recommendations are immediately used for controlling the train, for example in autonomous trains.

The term friction brake refers to any kind of brake that relies on a mechanical interaction between a wheel of the train or a component rotating with a wheel of the train and a stationary component - in the frame of reference of the train - and brakes the wheels via friction between these components. Modern friction brakes for trains are often operated pneumatically, such that the friction brakes are also referred to as pneumatic brakes. The term electrodynamic brake refers to any kind of brake that is electromagnetically coupled to the wheels or to components rotating with the wheels of the train and that extract electromagnetic energy from those rotating components, thus braking the train. In comparison, electrodynamic brakes have the advantage of generating less noise than friction brakes and being able to recuperate energy during the braking. However, friction brakes tend to be stronger and are therefore often preferred in heavy braking situations or emergency stop operations. In a train, the locomotive and/or the other rail cars may be equipped with both electrodynamic and friction brakes. It is possible that all rail cars of the train have both kinds of brakes, such that all rail cars can be decelerated simultaneously and the forces at the interfaces between the rail cars are kept low.

The term train, as used herein, includes any type of railway vehicle, such as long distance passenger or freight trains, shorter distance regional trains, suburban trains, metropolitan area underground trains, and inner-city tram trains. It also includes industrial railway vehicles, such as used in large industrial plants or mines. It further relates both to fuel-powered trains as well as electrically powered trains. Yet further, the term train encompasses trains having one locomotive, also referred to as traction drive unit of the train, or a plurality of locomotives. Further, the train may have any suitable number of wagons / rail cars, such as passenger cars or freight cars.

The term trip segment refers to a defined portion / section of a given trip to be undertaken by the train. The term trip segment may refer to a portion of the trip between two points of interest, such as between two stations or between two signals / switches or between a stop and a signal, etc. It may also refer to an arbitrarily defined portion of the trip, such as to the next 20 km, 50 km or 100 km of the trip, starting from the actual position of the train. The term trip segment may also refer to the whole trip for a given time interval, such as for a given day, e.g. to a trip from a start point in the morning to an end point in the evening, including multiple stops along the way.

According to a further embodiment, the brake preference rate is a brake preference value. When the brake preference rate is a single value, the associating of each of the plurality of braking sections with a respective brake selection recommendation is a quickly executable and easily implementable operation. In an alternative embodiment, the brake preference rate is a brake preference range, having a brake preference value and a preference tolerance interval. Providing a brake preference range allows for more degrees of freedom in the determining of the energy-optimized velocity profile, at least in case the constraint of the brake preference rate is taken into account for determining the energy-optimized velocity profile. In particular, situations of particularly good energy regeneration may be better made use of in the framework of the brake preference rate being a brake reference range. The brake preference value may be an upper limit value of the brake preference range or a lower limit value of the brake preference range or somewhere within the brake preference range. In other words, the preference tolerance interval may be entirely to the lower side of the brake preference value or entirely to the upper side of the brake preference value or around the brake preference value. The size of the preference tolerance interval may be dependent on or independent from the brake preference value. For example, the preference tolerance interval may be +/- 10% of the brake preference value or +/- 5% of the brake preference value or another suitable interval. It may also be an absolute interval.

According to a further embodiment, the brake preference value is in a range of between 0.5 and 0.9, in particular of between 0.7 and 0.8. These values indicate that the electrodynamic brakes are intended to be used between 50% and 90%, in particular between 70% and 80%, of the time or for braking between 50% and 90%, in particular for between 70% and 80%, of the energy contained in the motion of the train.

According to a further embodiment, the brake preference value represents a ratio of application times of the at least one electrodynamic brake and the at least one friction brake. For example, if the brake preference value is 4 in this framework, this means that it is desired that the at least one electrodynamic brake is applied during the trip segment for a duration that is four times as long as the application duration of the at least one friction brake. This ratio may be referred to as a ratio of 4 or as a ratio of 4:1. The ratio may also be expressed as a %-value or an according decimal point value. In the given example, these values would be 80% and 0.8, respectively. By defining such a ratio of application times as the brake preference rate, the method according to exemplary embodiments of the invention leads to providing brake section recommendations that indicate the recommendation of using the electrodynamic brakes 80% of the time and using the friction brakes 20% of the time.

According to an alternative embodiment, the brake preference value represents a ratio of braking energy quantities of the at least one electrodynamic brake and the at least one friction brake. In this way, braking at higher speeds may be given a larger weight than braking at lower speeds. In this way, the ratio may more closely resemble the stresses on the brakes, which tend to be a good measure of the actual wear of the brakes and, thus, tend to be a good indication of when the next maintenance is required.

According to a further embodiment, each brake selection recommendation is one of an electrodynamic brake recommendation, a friction brake recommendation, and a combined electrodynamic and friction brake recommendation. In other words, each brake selection recommendation may indicate to the driver of the train whether to use the at least electrodynamic brake or to use the at least one friction brake or to use both the at least one electrodynamic brake and the least one friction brake. It is also possible that each brake selection recommendation is one of an electrodynamic brake recommendation and a friction brake recommendation, i.e. that each brake selection recommendation is a binary recommendation between electrodynamic and friction brakes.

According to a further embodiment, the brake preference rate is based on brake maintenance intervals for the at least one electrodynamic brake and the at least one friction brake. In this way, the desired split between using electrodynamic brakes versus using friction brakes is chosen in a way to align the brake maintenance intervals for the electrodynamic and friction brakes. In particular, the brake preference rate may be based on the ratio of the brake maintenance intervals for the at least one electrodynamic brake and the at least one friction brake. In particular, the brake preference rate may correspond to said ratio or may be a multiple of said ratio or may equal to said ratio divided by a natural number. In this way, it can be achieved that the electrodynamic brakes and the friction brakes are maintained at the same time or that one of the two kinds of brakes is maintained every second or third or n-th time the other kind of brakes is maintained. In particular, the brake preference value may be based on the ratio of brake maintenance intervals. As discussed above, a preference tolerance interval may be applied to this brake preference value.

According to a further embodiment, the step of defining the brake preference rate comprises using a global rate preference value and adjusting the global brake preference value on a basis of historic brake usage data. In this way, when the method according to exemplary embodiments of the invention is used for multiple trip segments throughout the continued usage of the train, the brake preference rate may be adjusted from trip segment to trip segment, such that the usage of the brakes converges to the brake preference value, even if the driver of the train deviates therefrom during individual trip segments. In other words, the global brake preference value forms a starting point for defining the brake preference rate, with an adjustment thereof being performed depending on historic brake usage data. The historic brake usage data may be the brake usage data of a pre-defined number of trips before the trip segment in question. It is also possible that the historic brake usage data is the entirety of all brake usage data since the last maintenance of the brakes.

According to a further embodiment, the brake preference rate is settable by the driver of the train. In particular, the brake preference rate may be a pre-defined brake preference rate that is adjustable by the driver of the train. Further in particular, the step of defining the brake preference rate may comprise the step of pre-setting the brake preference rate, outputting the brake preference rate to the driver, and receiving a confirmation of the brake preference rate from the driver or receiving an adjusted brake preference rate from the driver. In this way, the driver can overwrite the brake preference rate, thus letting his personal knowledge about the train and/or particular conditions of the trip segment influence the setting of the brake preference rate. For example, in case of slippery or icy track conditions, the driver may adjust the brake preference rate towards the usage of the friction brakes, in order to enhance safety of the train during operation.

According to a further embodiment, the step of determining the energy-optimized velocity profile and associating each of the plurality of braking sections with a respective brake selection recommendation takes at least one of grid re-feed capacities of the train and temporary energy storage capacities of the train into account. In this way, the energy recuperation by the electrodynamic brakes may be taken into account for the determining the energy-optimized velocity profile and/or the associating of each of the plurality of braking sections with a respective brake selection recommendation. In this way, it may be ensured that the recuperated energy plays a role in the optimization of the energy consumption. If the train in question has only one of grid re-feed capacities and temporary energy storage capacities, it is apparent that only this one kind of usage of recuperated energy is taken into account. The term grid re-feed capacities refers to the capability of the train to couple recuperated electrical energy back into the electrical grid. An example of temporary energy storage capacity of the train is an on-board battery.

According to a further embodiment, the step of determining the energy-optimized velocity profile and associating each of the plurality of braking sections with a respective brake selection recommendation ways re-fed energy and/or temporarily stored energy on-board of the train with a respective regeneration factor. In particular, the regeneration factor may be a value between 0 and 1. This weighing may account for the electrical losses suffered when supplying electrical energy back into the grid and/or when storing electrical energy in an on-board battery. By providing this regeneration factor, it may be ensured that the recuperated energy is taken into account for the energy optimization at an appropriate rate, resembling the actual gain of energy re-feeding or energy storage on-board. It is also possible that the regeneration factor models the re-purchasing price that a grid operator offers for receiving electrical energy into the power grid. This re-purchasing factor may vary from country to country or from region to region. By taking into account such a re-purchasing price, it is possible to optimize the velocity profile in a way to use the electrodynamic brakes where the energy recuperation adds the greatest value.

According to a further embodiment, the step of determining the energy-optimized velocity profile and associating each of the plurality of braking sections with a respective brake selection recommendation attributes a larger weight to the maximum travel time for the trip segment, if the maximum travel time for the trip segment and the brake preference rate between the at least one electrodynamic brake and the at least one friction brake cannot be met simultaneously for the trip segment. In this way, greater importance is given to the schedule constraint than to the brake preference rate constraint. The rationale behind this greater importance is that not exceeding the maximum travel time is generally seen as highly important, while not meeting a desired brake preference rate may be made up for during another trip segment where the maximum travel time is less of a concern.

According to a further embodiment, the step of determining the energy-optimized velocity profile and associating each of the plurality of braking sections with a respective brake selection recommendation takes desired noise limitations for the plurality of braking sections into account. In this way, the less noisy electrodynamic brakes may be given preference in environments where noise is perceived as highly disturbing, in particular crowded environments, such as train stations or densely populated areas.

According to a further embodiment, the method is repeatedly carried out in regular intervals for providing updated brake selection recommendations to the driver of the train over time. For example, the method may be carried out every two minutes. In this way, the brake selection recommendations for a later portion of the trip segment may be adapted to the actual brake selections by the driver in an earlier portion of the trip segment, such that the actual brake usage may be steered towards the brake preference rate. In addition / as an alternative, the method may be repeatedly carried out in response to respective start commands for providing updated brake selection recommendations to the driver of the train over time. For example, the driver may be enabled to issue a start command and to trigger the execution of the method upon leaving a station or upon accelerating the train after a temporary stop at a stop signal, etc. In addition / as an alternative, the method may be repeated when the actual brake usage deviates from the brake preference rate by a predetermined tolerance amount / percentage.

According to a further embodiment, the step of providing the respective brake selection recommendations may comprise the step of visually providing the brake selection recommendations to the driver of the train via a display and/or the step of audibly providing the brake selection recommendations to the driver of the train via a loudspeaker. The providing of the respective brake selection recommendations may happen in the respective braking sections of the trip segment.

Exemplary embodiments of the invention further include a method of braking a train having at least one electrodynamic brake and at least one friction brake during operation, comprising the steps of providing brake selection recommendations to a driver of the train, as described in any of the embodiments above, and enabling the driver of the train to apply at least one of the at least one electrodynamic brake and the at least one friction brake on the basis of the brake selection recommendations. In this way, the driver can adopt the brake selection recommendations and the final result of the method has an actual impact on the operation of the train. While the final control remains with the driver, the realization of the brake selection recommendation can be easily carried out. It is possible that the train driver controls the at least one electrodynamic brake and the at least one friction brake by a separate control unit of the train, i.e. by a control unit of the train that is separate from a train driver advisory system that provides the brake selection recommendations. However, it is also possible that the train driver can accept the brake selection recommendation in question, with the brake selection recommendation then being transmitted from the train driver advisory system to the control unit of the train without any further driver interaction.

Exemplary embodiments of the invention further include a method of aligning brake maintenance intervals of a train having at least one electrodynamic brake and at least one friction brake, the method comprising the steps of setting a global brake preference value depending on the brake maintenance intervals of the at least one electrodynamic brake and the at least one friction brake; providing brake selection recommendations to a driver of the train, as described in any of the embodiments above, with the defining of the brake preference rate between the at least one electrodynamic brake and the at least one friction brake depending on the global brake preference value; and carrying out maintenance of the at least one electrodynamic brake and the at least one friction brake during one maintenance service. Maintaining the at least one electrodynamic brake and the at least one friction brake during one maintenance service means that the maintenance of both brake systems is carried out in the same time window that the train is out of service, i.e. during the same down time. In this way, the overall operating efficiency of the train may be enhanced. The maintenance intervals of not immediately related components may be efficiently managed.

Exemplary embodiments of the invention further include a train driver advisory system for providing brake selection recommendations to a driver of a train, the train driver advisory system comprising a memory for storing trip data, schedule data, train data and brake preference data; and a computation module, coupled to the memory and configured to carry out the method of providing brake selection recommendations, as described in any of the embodiments above, with the defining of the brake preference rate between the at least one electrodynamic brake and the at least one friction brake depending on the brake preference data. The trip data may contain one or more of the distance of the trip segment, the altitude profile of the trip segment, the speed limits along the trip segment, the track and/or weather conditions, etc. The schedule data may contain the maximum travel time. The train data may comprise data about the dynamic behavior characteristics of the train and the associated energy consumption / recuperation. The brake preference data may contain one or more of a global brake preference value, historic brake usage data, and functions for relating those pieces of data and / or for calculating a preference tolerance interval. The additional features, modifications, and effects, described above with respect to the method of providing brake selection recommendations to a driver of a train, equally apply to the train driver advisory system. The computation module may be a hardware component, such as an application specific electronic circuit, a software program to be run on a multiple purpose processor, or a combination of specific hardware and software components. The computation module and the memory may be part of an integrated system, such as a laptop computer, or may be separate components, coupled in a suitable manner for data exchange.

According to a further embodiment, the train driver advisory system further comprises a display for visually providing the brake selection recommendations to the driver of the train. In addition / alternatively, the train driver advisory system may further comprise a speaker for audibly providing the brake selection recommendations to the driver of the train.

Exemplary embodiments of the invention further include a train comprising a train driver advisory system, as described in any of the embodiments above. The additional features, modifications, and effects, described above with respect to the train driver advisory system, equally apply to the train.

Further exemplary embodiments of the invention are described in detail below with reference with the accompanying figures.
- Fig. 1: shows a schematic illustration of a train, equipped with a train driver advisory system in accordance with exemplary embodiments of the invention.
- Fig. 2: shows a schematic illustration of another train, equipped with a train driver advisory system in accordance with exemplary embodiments of the invention.
- Fig. 3: shows a schematic illustration of yet another train, equipped with a train driver advisory system in accordance with exemplary embodiments of the invention.
- Fig. 4: depicts a flow diagram for a method of providing brake selection recommendations in accordance with exemplary embodiments of the invention.
- Fig. 5: depicts a flow diagram for another method of providing brake selection recommendations in accordance with exemplary embodiments of the invention.
- Fig. 6: depicts an illustration of exemplary results of a method of providing brake selection recommendations to a driver of a train in accordance with exemplary embodiments of the invention for a particular trip segment.
- Fig. 7: shows a block diagram of a train driver advisory system in accordance with exemplary embodiments of the invention.

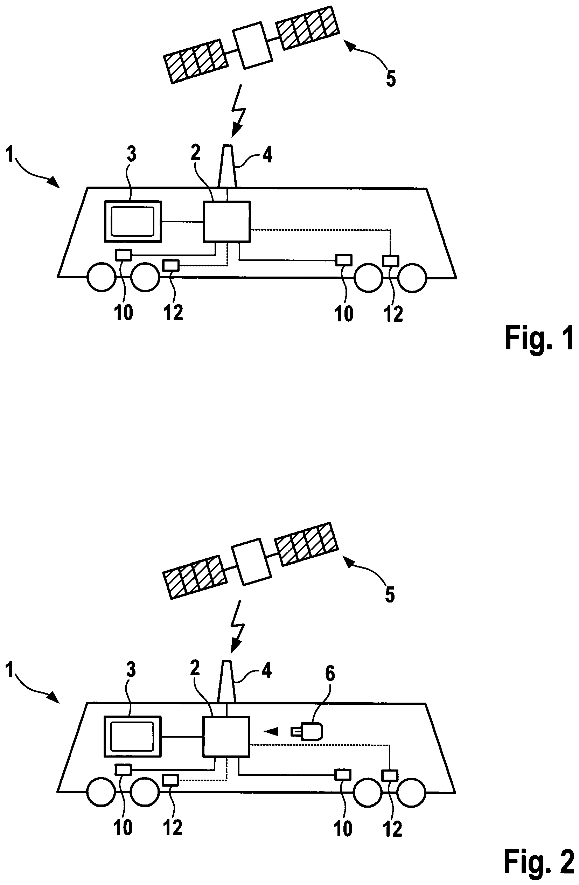

**Fig. 1** shows a schematic illustration of a train 1, equipped with a train driver advisory system 3 in accordance with exemplary embodiments of the invention. The train 1 is depicted as consisting of a locomotive, also referred to as a traction drive unit, only. However, it is understood that the train 1 may comprise further rail cars, such as passenger wagons or freight cars. The train 1 can also include multiple locomotives, with one or more or all of them being equipped with respective train driver advisory systems.

The train driver advisory system 3 has a computation module, such as a processor with associated processor memory, and a memory for storing trip data about a trip to be undertaken by the train, train data about the dynamic behavior characteristics of the train, schedule data and brake preference data. The train driver advisory system 3 further has a display for providing driving recommendations to a driver of the train 1, such as accelerating, speed keeping, and braking recommendations.

The train 1 further comprises a train control unit 2, which is coupled to the train driver advisory system 3. The train control unit 2 is the interface for the train driver to control the train 1. In particular, the train control unit 2 is coupled to the one or more engines of the train 1 as well as to the brakes of the train for controlling the velocity of the train. In this way, the driver can control the velocity of the train 1 via the train control unit 2. In particular, the train control unit 2 is coupled to a plurality of electrodynamic brakes 10 and to a plurality of friction brakes 12. While two electrodynamic brakes 10 and two friction brakes 12 are shown in the schematic illustration of Fig. 1, it is understood that the train 1 may have a smaller or larger number of electrodynamic brakes and friction brakes. In particular, if the train 1 has additional passenger wagon and / or freight cars and, potentially, additional locomotives, all of these different kinds of carts may be equipped with electrodynamic brakes and/or friction brakes. In other words, the entirety of the electrodynamic brakes and the friction brakes may be distributed over the various cars of the train. All these brakes may be controlled via the train control unit 2, depicted in Fig. 1. It is also possible that certain sub-sets of brakes are controlled by different control units, such as control units of different locomotives.

The train 1 is further equipped with a receiver 4 of a navigation satellite system 5, in particular a global navigation satellite system, such as GPS, for receiving data that allows the train control unit 2 and/or the train driver advisory system 3 to determine the momentary / actual position of the train 1.

In the exemplary embodiment of Fig. 1, various data about the train 1 as well as about a trip to be undertaken by the train 1 as well as about the schedule of the train 1 are present in the train control unit 2.

The train control unit 2 has high level data on the accelerating and braking characteristics of the train 1. In particular, the train control unit 2 has data on the different kinds of feasible levels of accelerating and braking and corresponding information with respect to the energy consumption and, if applicable, energy recuperation at those levels. It is also possible that the train control unit 2 has data on more basic physical properties of the train 1, such as length, number of rail cars, weight of the rail cars, power rating(s) of the engine(s), associated energy consumption, braking forces of the brakes, etc. It is further possible that the train control unit 2 and/or the train driver advisory system 3 is capable of calculating above described high level accelerating and braking data and associated energy consumption/recuperation data from the more basic physical characteristics of the train. The described data, potentially including further pieces of data, determining the dynamic behavior of the train 1, are generally referred to as the dynamic behavior characteristics of the train.

Further, the train control unit 2 has various data on the trip to be undertaken by the train 1 as well as schedule data. In particular, the train control unit 2 may have data such as the overall distance of a trip, data on various legs of the trip, such as the distances of the individual legs between stations, the altitude profile along the trip, the velocity limits along the trip, the type and, potentially, the state of the rails, on which the train 1 drives, weather information, etc. The schedule data may comprise data such as scheduled travel times, travel time limits for the entire trip and/or for particular legs or segments of the trip, minimum travel times, when all velocity limits are obeyed, acceptable deviations from the minimum travel times and/or scheduled travel times, etc. This data may be present in the train control unit 2 for all trips that the train may possibly be assigned to.

The train driver advisory system 3 is coupled to the train control unit 2 and can access all of the dynamic behavior characteristics of the train, the data on the trip to be undertaken by the train 1, and the schedule data. On the basis of this information, the train driver advisory system 3 determines an energy-optimized velocity profile for a given trip segment and associates the braking sections of the trip segment with respective brake selection recommendations, constrained by the travel time limit for the trip segment and the brake preference rate, as will be explained in greater detail below. Further, the train driver advisory system 3 provides driving recommendations on the basis of the determined energy-optimized velocity profile to the driver of the train 1, the driving recommendations including brake selection recommendations. The train driver may then adopt the driving recommendation and operate the train 1 accordingly via the train control unit 2.

**Fig. 2** shows a schematic illustration of another train 1, also equipped with a train driver advisory system 3 in accordance with exemplary embodiments of the invention. The train 1 has many components that are identical to the respective components of the train 1 of Fig. 1. They are not described in detail, and above description of Fig. 1 is referred to herewith. The train drive unit 2 of Fig. 2 is similar to the train drive unit 2 of Fig. 1, but has an additional data interface 6. Via the data interface 6, additional and/or updated data may be imported into the train drive unit 2. For example, after the set-up of the train 1 has been changed, such as due to a de-coupling of particular rail cars and/or an adding of more / different rail cars, new data about the physical properties of the train 1 can be imported into the train drive unit 2. Also, when the train 1 is assigned to a new route and/or when the schedule for a particular trip is changed, updated and/or new trip data and schedule data may be imported via the data interface 6. The data interface 6 may be any kind of data interface that allows for an operator to connect some form of data carrier / data storage medium to the train drive unit 2. Exemplary data carriers are USB sticks, CDs and DVDs, laptop computers, etc.

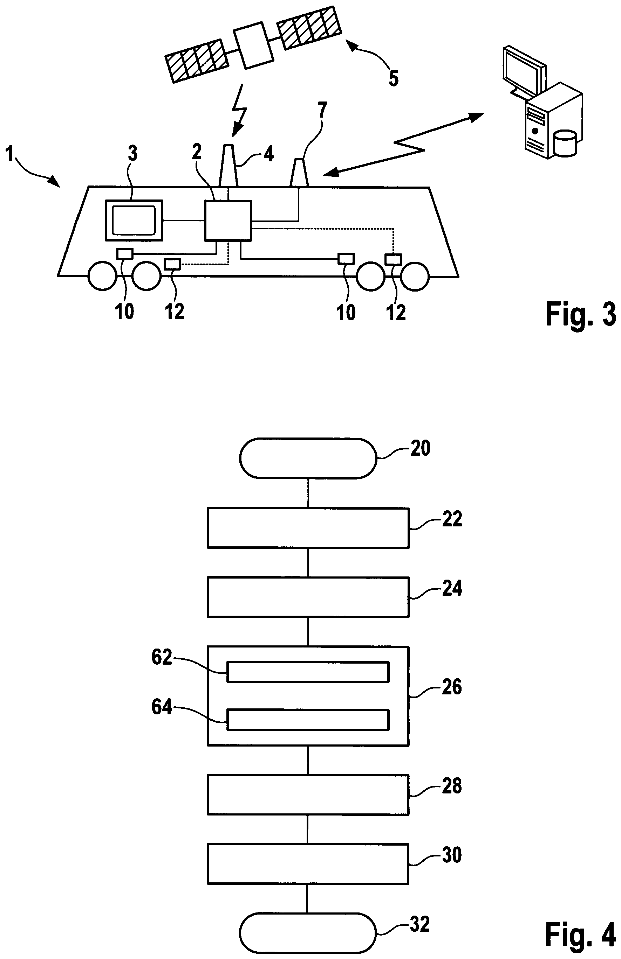

**Fig. 3** shows yet another train 1, equipped with a train driver advisory system 3 in accordance with exemplary embodiments of the invention. The train 1 of Fig. 3 is similar to the train 1 of Fig. 1 and the train 1 of Fig. 2. Many components of the train 1 of Fig. 3 are identical to the components described above. The description is not repeated, and the description of those components with respect to Fig. 1 and 2 is referred to herewith. Analogous to the train 1 of Fig. 2, the train 1 of Fig. 3 also has an additional data interface to the outside of the train 1. In the exemplary embodiment of Fig. 3, the train 1 has a wireless communication interface 7, coupled to the train control unit 2. The wireless communication interface 7 is capable of exchanging data with an external computer system 8. The external computer system 8 may be a train coordination center that coordinates the operation of various trains in a railway network. In this way, the train 1 and, thus, the train driver advisory system 3 can be provided with up-to-date information on the trip being undertaken by the train 1, such as potentially adjusted speed limits along the trip, data on particular weather influences, data on potential obstacles, data on necessary re-routing of the train 1, etc.

In Fig. 1 to 3, the train driver advisory system 3 accesses the data on the physical behavior characteristics of the train 1, the trip data, the schedule data, and the position data via the train control unit 2. However, it is pointed out that such data may also be stored in a dedicated memory of the train driver advisory system 3 itself and that the train driver advisory system 3 may be directly coupled to one or all of the receiver 4 of the global navigation satellite system 5, the data interface 6, and the wireless communication interface 7.

**Fig. 4** shows a flow diagram of a method of providing brake selection recommendations in accordance with exemplary embodiments of the invention. The depicted method may for example be carried out by the train driver advisory system 3, shown throughout Figs. 1 to 3. The method may be carried at the beginning of a trip segment of the train, but may also be carried out at arbitrary points in time during the train operation. It may also be carried out before starting the train operation for the trip segment in question. Some steps may also be carried out throughout the trip, as will be explained below.

The method has a start point 20, which marks the beginning of the method of providing brake selection recommendations. In step 22, data for carrying out the determination of the energy-optimized velocity profile are accessed. For example, this data may be loaded from a memory of the train driver advisory system into a computation module of the train driver advisory system. This data comprises trip data as well as schedule data.

The trip data may contain various kinds of information about the trip segment to be covered by the train. For example, the trip data may contain the overall distance / length of the trip segment, the altitude profile of the trip segment, the speed limits along the trip segment, the sections of energy supply from the power grid towards the train, in case the power supply line has interruptions, the sections of energy re-feed possibilities into the power grid, the re-purchasing price of re-fed energy into the power grid, the noise limitations along the trip segment, the track and/or weather conditions along the trip segment, etc. The trip data may comprise one or more or all of these kinds of data for the optimization. It is also possible that any kind of subset of these kinds of data is accessed in step 22.

The schedule data may contain the maximum travel time for the trip segment in question. This maximum travel time may be derived from a complete set of schedule information, as provided by a train operator. It is also possible that the maximum travel time is individually provided for the trip segment in question. The maximum travel time may be an absolute value or may be provided in relation to the minimum possible travel time, such as for example 120% of the minimum possible travel time.

The train data may contain the dynamic behavior characteristics of the train, such as the accelerating capabilities, the braking capabilities, both when using the electro dynamic brakes and when using the friction brakes, as well as the associated energy consumption and energy recuperation for the accelerating and the braking. It may also contain the energy consumption for maintaining a desired speed, depending on the train speed. It is possible that such values are given as high level values. However, it is also possible that basic physical parameters about the train, such as the number and mass of locomotives and passenger cars as well as freight cars, about the propulsion system, such as power ratings and efficiency levels, as well as about the braking system, such as braking forces, are provided, with the high level acceleration / braking capabilities and associated energy consumption / recuperation values being calculated from physical principles and/or models of the train in question.

In step 24, the brake preference rate between the electrodynamic brakes and the friction brakes is defined. In the exemplary embodiment of Fig.4, a single brake preference value is defined in step 24. However, it is also possible that a brake preference range is defined in this step 24. In the exemplary embodiment of Fig. 4, a global brake preference values is accessed in step 24. The global brake preference value may be stored in the memory of the train driver advisory system as well. In the exemplary embodiment of Fig. 4, the defining of the brake preference rate further takes historic brake usage data into account, which will be described in more detail below. For the moment, it is assumed that the currently described execution of the method of Fig. 4 is made for the first trip segment after a maintenance service, with the brake usage data being reset during the maintenance service. As a consequence, the brake preference rate is set to the global brake reference value in step 24. It is pointed out that it is possible that the driver interacts with the train driver advisory system in step 24 and influences the setting of the brake preference rate.

In the exemplary embodiment of Fig. 4, the global brake preference value is 0.8. This global brake reference value represents the desire that the electrodynamic brakes are used 80% of the time and that the friction brakes are used 20% of the time. In other words, the ratio of application times of the electrodynamic brakes and the friction brakes is 4:1. This value is based on the rationale that, in case the driver follows the brake selection recommendations, the electrodynamic brakes are used four times as much as the friction brakes until the next maintenance service. With the electrodynamic brakes requiring maintenance less often than the friction brakes in the exemplary embodiment of Fig. 4, it can thus be achieved that the maintenance of the electrodynamic brakes and the friction brakes can be carried out at the same time.

In step 26, the energy-optimized velocity profile for the trip segment in question is determined and each of a plurality of braking sections of the trip segment is associated with a respective brake selection recommendation. In the exemplary embodiment of Fig. 4, the steps of determining the energy-optimized velocity profile and the step of associating each of the plurality of braking sections with a respective brake selection recommendation are carried out subsequently, with the two sub-steps being indicated with reference numerals 62 and 64. In particular, in step 62, the energy-optimized velocity profile for the trip segment is determined on the basis of the distance of the trip segment, the altitude profile of the trip segment, the maximum travel time for the trip segment, the energy re-feed capacities of the train, the possibilities of feeding energy back into the power grid along the trip segment, and the dynamic behavior of the train in question. Further in particular, the velocity profile with the minimum overall energy consumption is determined, while the time for the trip segment is constraint to the maximum travel time. It is pointed out that the other kinds of data, in particular additional trip data, as discussed above, can be taken into account as well.

The energy-optimized velocity profile has a plurality of accelerating sections and a plurality of braking sections along the trip segment. In step 64, a respective brake selection recommendation is associated with each of the plurality of braking sections. This association is constrained by the brake preference rate, determined in step 24. Accordingly, in the given exemplary embodiment, 80% of the braking sections, measured in terms of their accumulated durations, are assigned an electro-dynamic brake recommendation, and 20% of the braking sections are assigned a friction brake recommendation. It is pointed out that the assigning of the brake selection recommendations may also be based on the energy absorbed by the brakes. In particular, it could be determined in accordance with the respective velocities of the energy-optimized velocity profile along the trip segment how much energy is absorbed by the brakes in which braking sections. The electrodynamic brake recommendation could then be assigned to a subset of braking sections where 80% of the braking energy is required. The result of step 26 therefore is the provision of an energy-optimized profile, including braking sections, and a brake selection recommendation for each of those braking sections.

In step 28, the brake selection recommendations are provided to the driver of the train. This may be done via a display of an overview of the braking sections with the respective brake selection recommendations at the beginning of the trip segment. However, it is also possible that step 28 is carried out throughout the trip segment, with the brake selection recommendations being provided to the driver of the train whenever a braking section is reached. In other words, step 28 may be carried out once at the beginning of the trip segment or throughout the entire trip segment.

Being provided with the brake selection recommendations, the train driver may follow the brake section recommendations and operate the electrodynamic brakes and the friction brakes of the train in an according manner. However, it is also possible that the train driver deviates from the brake selection recommendations and uses the non-recommended kind of brakes when he/she sees fit. Accordingly, throughout the driving of the train along the trip segment, an actual brake usage occurs.

In step 30, this actual brake usage is stored as historic brake usage data. This data may for example be also stored in the memory of the train driver advisory system. The actual brake usage may be stored throughout the driving along the trip segment, i.e. throughout the full duration of the trip segment, or once at the end of the trip segment. Further, the individual instances of brake usage may be stored or an aggregate metric of the brake usage may be stored in the memory. It is pointed out that the storing of historic brake usage in step 30 is optional and may be dispensed with. The method then ends at step 32.

For the next and further ensuing trip segments, the method of Fig. 4 is carried out again before starting the respective trip segment. As those further trip segments are not the first trip segment after the maintenance service, historic brake usage data is available in the memory of the train driver advisory system. As an example, it is assumed that the train driver used the electrodynamic brakes in 83% of the time during the first trip segment, described above. For the second trip segment, step 24 may define the brake preference rate for that particular trip segment in a way to bring the overall brake usage to 80% of electrodynamic brake usage. For example, when assuming that the second trip segment is equal in length to the first trip segment and similar in braking requirements, step 24 may define the brake preference rate to be 77% on the basis of the historic brake usage data of 83% and the global brake preference value of 80%. In this way, step 26 generates less electrodynamic brake recommendations for the second trip segment than for the first trip segment and therefore tries to steer the train driver into the direction of using the friction brakes more frequently than in the first trip segment.

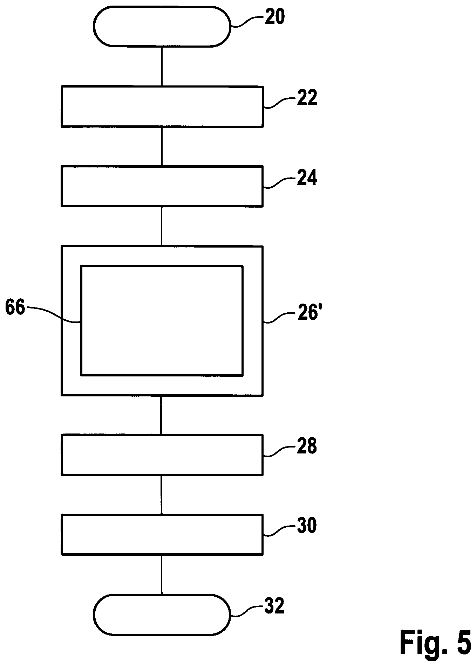

Fig. 5 shows a flow chart of a method of providing brake selection recommendations according to another embodiment of the invention. The method of Fig. 5 is very similar to the method of Fig. 4. Like steps are indicated with the same reference numerals, and reference is made to their description above.

Instead of step 26 of the embodiment of Fig. 5, the method of Fig. 5 has step 26'. Equal to step 26 of Fig. 4, step 26' also comprises the determining of the energy-optimized velocity profile for the trip segment and the associating of each of the plurality of braking sections with a respective brake selection recommendation. However, instead of carrying out these two aspects as subsequent sub-steps, as described with respect to Fig. 4, the step 26' comprises an integrated determining of the energy-optimized velocity profile and associating of braking sections and brake selection recommendations. This integrated single step is indicated with reference numeral 66. In particular, step 66 takes into account the interdependencies between the determining of the energy-optimized velocity profile and the associating of braking sections and brake selection recommendations. Further in particular, step 66 takes into account, for which braking section the use of the electrodynamic brakes and the associated energy recuperation has the largest positive effect on the minimization of energy consumption and for which braking section the friction brakes can be used without giving up a large energy recuperation potential and/or without giving up potentially lucrative re-feeding of energy into the power grid. In this way, the two constraints of maximum travel time and brake preference rate can jointly be taken into account for the determining of the energy-optimized velocity profile. In this context, it may be particularly useful to define a brake preference range in step 24, in order for the optimization to have some wiggle room for making use of particularly good energy recuperation scenarios.

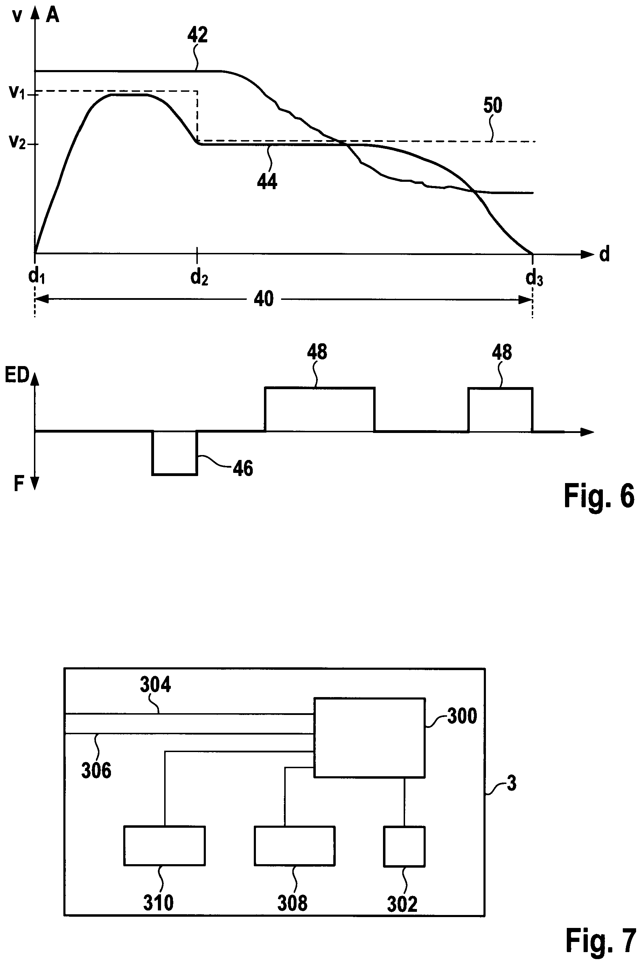

**Fig. 6** depicts an exemplary energy-optimized velocity profile 44 for a trip segment 40, having an altitude profile 42 and speed limits 50, and associated brake selection recommendations 46, 48. The energy-optimized velocity profile 44 and the brake selection recommendations 46, 48 may be the result of the methods, as described above with respect to Figs. 4 and 5, or similar methods.

The upper portion of Fig. 6 shows the altitude profile 42, the speed limits 50, and the energy-optimized velocity profile 44 in a coordinate system, with the distance of the trip segment 40 being provided along the x-axis. The trip segment 40 starts at a first position d₁ and ends at a third position d₃. The first and third positions d₁ and d₃ may be train stations. The trip segment 40 has a level portion along its first part, followed by a downhill portion, and a roughly level portion towards the end, as illustrated by the altitude profile 42. The speed limits 50 along the trip segment 40 are a first speed limit v₁ and a second speed limit v₂, with the first speed limit v₁ being higher then the second speed limit v₂. The first speed limit v₁ applies between the first position d₁ and a second position d₂, and the second speed limit v₂ applies between the second position d₂ and the third position d₃. The second speed limit v₂ applies shortly before the downhill portion of the trip segment 40 and may be provided for safety reasons.

In the lower portion of Fig. 6, the brake selection recommendations are depicted along the trip segment 40. Friction brake recommendations are indicated with reference numeral 46, and electrodynamic brake recommendations are indicated with reference numeral 48. In the first part of the trip segment 40, there is one friction brake recommendation 46, while there are two electrodynamic brake recommendations 48 in the second part of the trip segment 40, which will be described in greater detail below.

The energy-optimized velocity profile 44 and the brake selection recommendations 46, 48 are determined under the following constraints. The maximum travel time is 120% of the minimum possible travel time for the train in question, when obeying the speed limits 50. The brake preference rate is 0.8, indicating a usage of the electrodynamic brakes in 80% of the time. The energy-optimized velocity profile is determined on the basis of various factors, as described above with respect to Fig. 4. While a quicker covering of the trip segment 40 by the train would be possible, the energy-optimization makes use of the 20% leeway in the travel time for the purpose of minimizing energy consumption. In particular, the energy-optimized velocity profile provides for an acceleration below the maximum possible acceleration at the beginning of the trip segment 40. It also provides for a coasting section before the braking section towards the end of the trip segment 40. This coasting section can be seen from the slow decrease of the train speed before the final braking section.

By providing a friction brake recommendation 46 before the second position d₂, i.e. before the switch to the lower speed limit v₂, and by providing electrodynamic brake recommendations 48 during a portion of the downhill section of the trip segment 40, which ensures not to exceed the second speed limit v₂, and during the approach of the third position d₃, the brake selection recommendations recommend the electrodynamic brakes in 80% of the braking sections. The electrodynamic brake recommendation 48 towards the target station also helps in keeping the noise in the station environment low.

The energy-optimized velocity profile 44 and the brake selection recommendations 46, 48 may be provided to the driver of the train in the form of a diagram, as shown in Fig. 6, or in any other suitable manner to convey the recommendations to the driver.

**Fig. 7** shows a block diagram of a train driver advisory system 3 in accordance with exemplary embodiments of the invention. The train driver advisory system 3 has a processor 300 and a memory 302, coupled to the processor 300. Further, the train driver advisory system 3 has a position signal input 304, coupled to the processor 300, for receiving position data, indicative of the momentary position of the train. Yet further, the train driver advisory system has a trip, train, schedule and brake preference data input 306, also coupled to the processor 300, for receiving data about the trip to be undertaken, such as distance and altitude data, for receiving data about the train, such as dynamic behavior characteristics of the train, for receiving schedule data, and for receiving brake preference data. It is also possible that the train driver advisory system 3 has a smaller or larger number of inputs for receiving the position data, trip data, train data, schedule data, and brake preference data. The train driver advisory system 3 further has a display 308 and a loudspeaker 310, both coupled to the processor 300, for providing driving recommendations to the driver. The processor is configured to carry out the method of providing brake selection recommendations to the driver of the train, as described in any of the embodiments above.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teaching of the invention without departing from the essential scope thereof. Therefore, it is intended that the invention not be limited to the particular embodiments disclosed, but that the invention will include all embodiments falling within the scope of the appended claims.

### LIST OF REFERENCE NUMERALS

- 1: train
- 2: train control unit
- 3: train driver advisory system
- 4: receiver
- 5: navigation satellite system
- 6: data interface
- 7: wireless communication interface
- 8: external computer system
- 10: electrodynamic brakes
- 12: friction brakes
- 20, 22, 24, 26, 28: method steps
- 30, 32: method steps
- 40: trip segment
- 42: altitude profile
- 44: energy-optimized velocity profile
- 46, 48: brake selection recommendations
- 50: speed limits
- 62, 64, 66: method steps
- 300: processor
- 302: memory
- 304: position signal input
- 306: trip, train, schedule and brake preference data input
- 308: display
- 310: loudspeaker

## Claims

1. Method of providing brake selection recommendations (46, 48) to a driver of a train (1) during operation of the train, with the train having at least one electrodynamic brake (10) and at least one friction brake (12), the method comprising the steps of:
defining a brake preference rate between the at least one electrodynamic brake and the at least one friction brake,
determining an energy-optimized velocity profile (44) for a trip segment of the train, with the energy-optimized velocity profile having a plurality of braking sections, and associating each of the plurality of braking sections with a respective brake selection recommendation, wherein the determining of the energy-optimized velocity profile and the associating of each of the plurality of braking sections with a respective brake selection recommendation are constrained by a maximum travel time for the trip segment and the brake preference rate between the at least one electrodynamic brake and the at least one friction brake, and
providing the respective brake selection recommendations for the plurality of braking sections to the driver of the train.

2. Method according to claim 1, wherein the brake preference rate is a brake preference value or wherein the brake preference rate is a brake preference range, having a brake preference value and a preference tolerance interval.

3. Method according to claim 2, wherein the brake preference value represents a ratio of application times of the at least one electrodynamic brake (10) and the at least one friction brake (12) or wherein the brake preference value represents a ratio of braking energy quantities of the at least one electrodynamic brake (10) and the at least one friction brake (12).

4. Method according to any one of the preceding claims, wherein each brake selection recommendation is one of an electrodynamic brake recommendation (48), a friction brake recommendation (46), and a combined electrodynamic and friction brake recommendation.

5. Method according to any one of the preceding claims, wherein the brake preference rate is based on brake maintenance intervals for the at least one electrodynamic brake (10) and the at least one friction brake (12).

6. Method according to any one of the preceding claims, wherein the step of defining the brake preference rate comprises using a global brake preference value and adjusting the global brake preference value on the basis of historic brake usage data.

7. Method according to any one of the preceding claims, wherein the brake preference rate is settable by the driver of the train.

8. Method according to any one of the preceding claims, wherein the step of determining the energy-optimized velocity profile (44) and associating each of the plurality of braking sections with a respective brake selection recommendation (46, 48) takes at least one of grid re-feed capacities of the train and temporary energy storage capacities of the train into account.

9. Method according to claim 8, wherein the step of determining the energy-optimized velocity profile (44) and associating each of the plurality of braking sections with a respective brake selection recommendation (46, 48) weighs re-fed energy and/or temporarily stored energy on-board of the train with a respective regeneration factor.

10. Method according to any one of the preceding claims, wherein the step of determining the energy-optimized velocity profile (44) and associating each of the plurality of braking sections with a respective brake selection recommendation (46, 48) attributes a larger weight to the maximum travel time for the trip segment, if the maximum travel time for the trip segment and the brake preference rate between the at least one electrodynamic brake and the at least one friction brake cannot be met simultaneously for the trip segment.

11. Method according to any one of the preceding claims, wherein the step of determining the energy-optimized velocity profile (44) and associating each of the plurality of braking sections with a respective brake selection recommendation (46, 48) takes desired noise limitations for the plurality of braking sections into account.

12. Method of braking a train (1) having at least one electrodynamic brake (10) and at least one friction brake (12) during operation, comprising:
providing brake selection recommendations (46, 48) to a driver of the train according to the method of any one of the preceding claims, and
enabling the driver of the train to apply at least one of the at least one electrodynamic brake and the at least one friction brake on the basis of the brake selection recommendations.

13. Method of aligning brake maintenance intervals of a train (1) having at least one electrodynamic brake (10) and at least one friction brake (12), the method comprising the steps of:
setting a global brake preference value depending on the brake maintenance intervals of the at least one electrodynamic brake and the at least one friction brake,
providing brake selection recommendations (46, 48) to a driver of the train according to any one of claims 1 to 11, with the defining of the brake preference rate between the at least one electrodynamic brake and the at least one friction brake depending on the global brake preference value, and
carrying out maintenance of the at least one electrodynamic brake and the at least one friction brake during one maintenance service.

14. Train driver advisory system (3) for providing brake selection recommendations (46, 48) to a driver of a train, the train driver advisory system comprising:
a memory for storing trip data, schedule data, train data and brake preference data, and
a computation module, coupled to the memory and configured to carry out the method of providing brake selection recommendations in accordance with any one of claims 1 to 11, with the defining of the brake preference rate between the at least one electrodynamic brake and the at least one friction brake depending on the brake preference data.

15. Train driver advisory system (3) according to claim 14, further comprising at least one of:
a display for visually providing the brake selection recommendations to the driver of the train, and
a speaker for audibly providing the brake selection recommendations to the driver of the train.

## Patentansprüche

1. Verfahren zur Bereitstellung von Bremsenauswahlempfehlungen (46, 48) für einen Führer eines Zuges (1) während des Zugbetriebs, wobei der Zug mindestens eine elektrodynamische Bremse (10) und mindestens eine Reibungsbremse (12) hat, wobei das Verfahren die folgenden Schritte umfasst:
die Definition einer Bremsenbevorzugungsrate zwischen der mindestens einen elektrodynamischen Bremse und der mindestens einen Reibungsbremse,
die Bestimmung eines energieoptimierten Geschwindigkeitsprofils (44) für ein Fahrtsegment des Zuges, wobei das energieoptimierte Geschwindigkeitsprofil eine Vielzahl von Bremsabschnitten hat, und die Zuordnung eines jeden der Vielzahl von Bremsabschnitten zu einer jeweiligen Bremsenauswahlempfehlung, wobei die Bestimmung des energieoptimierten Geschwindigkeitsprofils und die Zuordnung eines jeden der Vielzahl von Bremsabschnitten zu einer jeweiligen Bremsenauswahlempfehlung durch eine maximale Fahrzeit und die Bremsenbevorzugungsrate zwischen der mindestens einen elektrodynamischen Bremse für das Fahrtsegment eingeschränkt werden, und
die Bereitstellung der jeweiligen Bremsenauswahlempfehlungen für die Vielzahl von Bremsabschnitten für den Führer des Zuges.

2. Verfahren nach Anspruch 1, wobei die Bremsenbevorzugungsrate ein Bremsenbevorzugungswert ist, oder wobei die Bremsenbevorzugungsrate ein Bremsenbevorzugungsbereich mit einem Bremsenbevorzugungswert und einer Bevorzugungstoleranzspanne ist.

3. Verfahren nach Anspruch 2, wobei der Bremsenbevorzugungswert ein Verhältnis zwischen den Bremsenanziehzeiten der mindestens einen elektrodynamischen Bremse (10) und der mindestens einen Reibungsbremse (12) repräsentiert, oder wobei der Bremsenbevorzugungswert ein Verhältnis zwischen den Bremsenergiemengen der mindestens einen elektrodynamischen Bremse (10) und der mindestens einen Reibungsbremse (12) repräsentiert.

4. Verfahren nach einem der vorhergehenden Ansprüche, wobei eine jede Bremsenauswahlempfehlung entweder eine Empfehlung der elektrodynamischen Bremse (48) oder eine Empfehlung der Reibungsbremse (46) oder eine Empfehlung der kombinierten elektrodynamischen und Reibungsbremse ist.

5. Verfahren nach einem der vorhergehenden Ansprüche, wobei die Bremsenbevorzugungsrate auf Bremsenwartungsintervallen für die mindestens eine elektrodynamische Bremse (10) und die mindestens eine Reibungsbremse (12) beruht.

6. Verfahren nach einem der vorhergehenden Ansprüche, wobei der Schritt der Definition der Bremsenbevorzugungsrate die Anwendung eines globalen Bremsenbevorzugungswertes und die Einstellung des globalen Bremsenbevorzugungswertes auf der Basis von historischen Bremsenbenutzungsdaten umfasst.

7. Verfahren nach einem der vorhergehenden Ansprüche, wobei die Bremsenbevorzugungsrate vom Führer des Zuges einstellbar ist.

8. Verfahren nach einem der vorhergehenden Ansprüche, wobei der Schritt der Bestimmung des energieoptimierten Geschwindigkeitsprofils (44) und der Zuordnung eines jeden der Vielzahl von Bremsabschnitten zu einer jeweiligen Bremsenauswahlempfehlung (46, 48) das Netzrückspeisungsvermögen des Zuges und/oder das kurzzeitige Energiespeichervermögen des Zuges berücksichtigt.

9. Verfahren nach Anspruch 8, wobei wobei der Schritt der Bestimmung des energieoptimierten Geschwindigkeitsprofils (44) und der Zuordnung eines jeden der Vielzahl von Bremsabschnitten zu einer jeweiligen Bremsenauswahlempfehlung (46, 48) die Rückspeisungsenergie und/oder die kurzzeitig an Bord des Zuges gespeicherte Energie mit einem jeweiligen Regenerationsfaktor gewichtet.

10. Verfahren nach einem der vorhergehenden Ansprüche, wobei der Schritt der Bestimmung des energieoptimierten Geschwindigkeitsprofils (44) und der Zuordnung eines jeden der Vielzahl von Bremsabschnitten zu einer jeweiligen Bremsenauswahlempfehlung (46, 48) der maximalen Fahrzeit für das Fahrtsegment eine höhere Gewichtung zuordnet, wenn die maximale Fahrzeit für das Fahrtsegment und die Bremsenbevorzugungsrate zwischen der mindestens einen elektrodynamischen Bremse und der mindestens einen Reibungsbremse nicht gleichzeitig für das Fahrtsegment erfüllt werden können.

11. Verfahren nach einem der vorhergehenden Ansprüche, wobei der Schritt der Bestimmung des energieoptimierten Geschwindigkeitsprofils (44) und der Zuordnung eines jeden der Vielzahl von Bremsabschnitten zu einer jeweiligen Bremsenauswahlempfehlung (46, 48) erwünschte Geräuschbegrenzungen für die Vielzahl der Bremsabschnitte berücksichtigt.

12. Verfahren zum Bremsen eines Zuges (1) mit mindestens einer elektrodynamischen Bremse (10) und mindestens einer Reibungsbremse (12) während des Betriebs, umfassend:
die Bereitstellung von Bremsenauswahlempfehlungen (46, 48) für den Führer des Zuges nach einem der vorhergehenden Ansprüche, und
die Befähigung des Führers des Zuges zum Anziehen der mindestens einen elektrodynamischen Bremse und/oder der mindestens einen Reibungsbremse auf der Basis der Bremsenauswahlempfehlungen.

13. Verfahren zum Koordinieren von Bremsenwartungsintervallen eines Zuges (1) mit mindestens einer elektrodynamischen Bremse (10) und mindestens einer Reibungsbremse (12) während des Betriebs, umfassend:
das Setzen eines globalen Bremsenbevorzugungswertes in Abhängigkeit der Bremsenwartungsintervalle der mindestens einen elektrodynamischen Bremse und der mindestens einen Reibungsbremse,
die Bereitstellung von Bremsenauswahlempfehlungen (46, 48) für einen Führer des Zuges nach einem der Ansprüche 1 bis 11, zusammen mit der Definition der Bremsenbevorzugungsrate zwischen der mindestens einen elektrodynamischen Bremse und der mindestens einen Reibungsbremse in Abhängigkeit des globalen Bremsenbevorzugungswertes, und
die Ausführung der Wartung der mindestens einen elektrodynamischen Bremse und der mindestens einen Reibungsbremse in einem Service.

14. Zugführerberatungssystem (3) zur Bereitstellung von Bremsenauswahlempfehlungen (46, 48) für einen Führer eines Zuges, umfassend:
einen Speicher zum Speichern von Fahrtdaten, Fahrplandaten, Zugdaten und Bremsenbevorzugungsdaten, und
ein an den Speicher gekoppeltes Rechenmodul, das zur Ausführung des Verfahrens zur Bereitstellung von Bremsenauswahlempfehlungen nach einem der Ansprüche 1 bis 11 ausgelegt ist, wobei die Definition der Bremsenbevorzugungsrate zwischen der mindestens einen elektrodynamischen Bremse und der mindestens einen Reibungsbremse von den Bremsenbevorzugungsdaten abhängt.

15. Zugführerberatungssystem (3) nach Anspruch 14, weiter umfassend:
ein Display zur Sichtanzeige der Bremsenauswahlempfehlungen für den Führer des Zuges, und/oder
einen Lautsprecher zur hörbaren Bereitstellung der Bremsenauswahlempfehlungen für den Führer des Zuges.

## Revendications

1. Procédé pour fournir des recommandations (46, 48) de sélection de freinage à un conducteur d'un train (1) pendant le fonctionnement du train, le train ayant au moins un frein (10) électrodynamique et au moins un frein (12) par frottement, le procédé comprenant les étapes dans lesquelles :
on définit un taux de préférence de freinage entre le au moins un frein électrodynamique et le au moins un frein par frottement,
on détermine un profil (44) de vitesse optimisée en énergie pour un segment de déplacement du train, le profil de vitesse optimisée en énergie ayant une pluralité de sections de freinage, et
on associe à chaque section de la pluralité de sections de freinage une recommandation de sélection de freinage respective, dans lequel la détermination du profil de vitesse optimisée en énergie et l'association de chaque section de la pluralité de sections de freinage à une recommandation de sélection de freinage respective sont contraintes par un temps de trajet maximum pour le segment de déplacement et le taux de préférence de freinage entre le au moins un frein électrodynamique et le au moins un frein par frottement, et
on fournit les recommandations de sélection de freinage respectives pour la pluralité de sections de freinage au conducteur du train.

2. Procédé suivant la revendication 1, dans lequel le taux de préférence de freinage est une valeur de préférence de freinage ou dans lequel le taux de préférence de freinage est une gamme de préférence de freinage, ayant une valeur de préférence de freinage et un intervalle de tolérance de préférence.

3. Procédé suivant la revendication 2, dans lequel la valeur de préférence de freinage représente un rapport des temps d'application du au moins un frein (10) électrodynamique et du au moins un frein (12) par frottement ou dans lequel la valeur de préférence de freinage représente un rapport des quantités d'énergie de freinage du au moins un frein (10) électrodynamique et du au moins un frein (12) par frottement.

4. Procédé suivant l'une quelconque des revendications précédentes, dans lequel chaque recommandation de sélection de freinage est l'une d'une recommandation (48) de freinage électrodynamique, d'une recommandation (46) de freinage par frottement et d'une recommandation de freinage combinée électrodynamique et par frottement.

5. Procédé suivant l'une quelconque des revendications précédentes, dans lequel le taux de préférence de freinage est fondé sur des intervalles de maintenance de freinage pour le au moins un frein (10) électrodynamique et le au moins un frein (12) par frottement.

6. Procédé suivant l'une quelconque des revendications précédentes, dans lequel l'étape de définition du taux de préférence de freinage comporte l'utilisation d'une valeur de préférence de freinage globale et l'ajustement de la valeur de préférence de freinage globale sur la base des données historiques d'utilisation de freinage.

7. Procédé suivant l'une quelconque des revendications précédentes, dans lequel le taux de préférence de freinage peut être réglé par le conducteur du train.

8. Procédé suivant l'une quelconque des revendications précédentes, dans lequel l'étape de détermination du profil (44) de vitesse optimisée en énergie et de l'association de chaque section de la pluralité de sections de freinage à une recommandation (46, 48) de sélection de freinage respective prend en compte au moins l'une des capacités de réalimentation grid du train et des capacités de stockage d'énergie temporaire du train.

9. Procédé suivant la revendication 8, dans lequel l'étape de détermination du profil (44) de vitesse optimisée en énergie et de l'association de chaque section de la pluralité de sections de freinage à une recommandation (46, 48) de sélection de freinage respective pondère l'énergie réalimentée et/ou l'énergie stockée temporairement à bord du train avec un facteur respectif de régénération.

10. Procédé suivant l'une quelconque des revendications précédentes, dans lequel l'étape de détermination du profil (44) de vitesse optimisée en énergie et de l'association de chacune de la pluralité de sections de freinage à une recommandation (46, 48) de sélection de freinage respective attribue un poids plus grand au temps de trajet maximum pour le segment de déplacement, si le temps de trajet maximum pour le segment de déplacement et le taux de préférence de freinage entre le au moins un frein électrodynamique et le au moins un frein par frottement ne peuvent pas être respectés simultanément pour le segment de déplacement.

11. Procédé suivant l'une quelconque des revendications précédentes, dans lequel l'étape de détermination du profil (44) de vitesse optimisée en énergie et d'association de chaque section de la pluralité de sections de freinage à une recommandation (46, 48) de sélection de freinage respective prend en compte des limitations de bruit souhaitées pour la pluralité de sections de freinage.

12. Procédé pour freiner un train (1) ayant au moins un frein (10) électrodynamique et au moins un frein (12) par frottement pendant le fonctionnement, comportant :
le fait de fournir des recommandations (46, 48) de sélection de freinage à un conducteur du train suivant le procédé suivant l'une quelconque des revendications précédentes, et
de permettre au conducteur du train d'appliquer au moins l'un du au moins un frein électrodynamique et du au moins un frein par frottement sur la base des recommandations de sélection de freinage.

13. Procédé pour aligner des intervalles de maintenance de freinage d'un train (1) ayant au moins un frein (10) électrodynamique et au moins un frein (12) par frottement, le procédé comportant les étapes dans lesquelles :
on règle une valeur de préférence de freinage globale en fonction des intervalles de maintenance de freinage du au moins un frein électrodynamique et du au moins un frein par frottement,
on fournit des recommandations (46, 48) de sélection de freinage à un conducteur du train suivant l'une quelconque des revendications 1 à 11, la définition du taux de préférence de freinage entre le au moins un frein électrodynamique et le au moins un frein par frottement étant fonction de la valeur de préférence de freinage globale, et
on effectue la maintenance du au moins un frein électrodynamique et du au moins un frein par frottement pendant un service de maintenance.

14. Système (3) pour conseiller le conducteur d'un train pour fournir des recommandations (46, 48) de sélection de freinage à un conducteur d'un train, le système de conseil au conducteur du train comportant :
une mémoire pour stocker des données de trajet, des données d'horaires, des données de train et des données de préférence de freinage, et
un module de calcul, couplé à la mémoire et configuré pour effectuer le procédé pour fournir des recommandations de sélection de freinage conformément à l'une quelconque des revendications 1 à 11, la définition du taux de préférence de freinage entre le au moins un frein électrodynamique et le au moins un frein par frottement étant fonction des données de préférence de freinage.

15. Système (3) pour conseiller un conducteur de train suivant la revendication 14, comportant en outre au moins l'un de :
un dispositif d'affichage pour fournir visuellement les recommandations de sélection de freinage au conducteur du train, et
un haut-parleur pour fournir de manière audible les recommandations de sélection de freinage au conducteur du train.
